# EUROPEAN PATENT APPLICATION

(11) **EP 3 886 414 A1**
(43) Date of publication of application: **29.09.2021**
(21) Application number: 18942515.0
(22) Date of filing: 03.12.2018
(51) Int. Cl.: H04M 1/725, G06F 3/16

(54) **ALARM CLOCK PLAYBACK METHOD AND APPARATUS, AND ELECTRONIC DEVICE**

(71) Applicant: SHENZHEN HEYTAP TECHNOLOGY CORP., LTD., Shenzhen, Guangdong 518057 (CN); GUANGDONG OPPO MOBILE TELECOMMUNICATIONS CORP., LTD., Dongguan, Guangdong 523860 (CN)
(72) Inventor: LI, Yajun, Dongguan, Guangdong 523860 (CN)
(74) Representative: Taor, Simon Edward William
(86) International application number: PCT/CN2018/119009
(87) International publication number: WO 2020/113390

(57) **Abstract**

A method for playing an alarm includes: receiving (S110) an instruction to play the alarm; monitoring (S 120), before playing the alarm, an occupation state of an audio resource for playing the alarm; obtaining (S130) information of an occupier in response to the occupation state indicating that the audio resource is occupied; and releasing (S140) the audio resource occupied by the occupier to use the audio resource to play the alarm, in response to the occupier being a non-call application. The present disclosure further provides an apparatus for playing an alarm, an electronic device, and a computer-readable storage medium, capable of solving the problem in the related art associated with abnormal playing of an alarm when an audio resource for playing the alarm is occupied, thereby achieving automatic correction of alarm playing, improving the stability of the system and enhancing the user experience.

## Description

### TECHNICAL FIELD

The present disclosure relates to information technology, and more particularly, to a method and an apparatus for playing an alarm as well as an electronic device.

### BACKGROUND

With the development of technology, more and more audio modes become available for electronic devices. The current audio modes can be divided into several mainstream modes such as ringtone, system, media, call, and alarm. Different audio modes occupy interface resources independently of each other. For example, when playing an alarm in the ringtone mode, playing a system audio in the system mode, playing a media audio stream in the media mode, and transmitting a call audio stream in the call mode, they can be independent of each other and do not affect each other. However, due to the complexity of the current electronic device operation, there may be abnormalities when some applications are invoking audio resources, resulting in abnormal playing of an alarm, which may have a significant impact on a user, as the user may miss alerts for important events or lose notes on his/her daily life or the like, and thus have a degraded user experience.

### SUMMARY

In view of above, it is desired to provide a method and an apparatus for playing an alarm, an electronic device, and a computer-readable storage medium, capable of automatically correcting abnormal playing of the alarm.

According to an embodiment of the present disclosure, a method for playing an alarm is provided. The method includes: receiving an instruction to play the alarm; monitoring, before playing the alarm, an occupation state of an audio resource for playing the alarm; obtaining information of an occupier in response to the occupation state indicating that the audio resource is occupied; and releasing the audio resource occupied by the occupier to use the audio resource to play the alarm, in response to the occupier being a non-call application.

According to an embodiment of the present disclosure, an apparatus for playing an alarm is provided. The apparatus includes: a receiving module configured to receive an instruction to play the alarm; a monitoring module configured to monitor, before playing of the alarm, an occupation state of an audio resource for playing the alarm; an obtaining module configured to obtain, when the occupation state of the audio resource is occupied, information of an occupier; and a correcting module configured to release, when the occupier is a non-call application, the audio resource occupied by the occupier to use the audio resource to play the alarm.

According to an embodiment of the present disclosure, an electronic device is provided. The electronic device includes a memory and a processor. The memory stores a computer program which, when executed by the processor, causes the processor to perform steps of the method for playing an alarm according to any of claims 1-7.

According to an embodiment of the present disclosure, a non-transitory computer-readable storage medium is provided. The non-transitory computer-readable storage medium has a computer program stored thereon. The computer program, when executed by a processor, implements steps of the method for playing an alarm according to any of claims 1-7.

When the electronic device and the computer readable storage medium implement the above method, depending on different occupation states of the audio resource, the audio resource is adaptively corrected to match the scenario, thereby reducing the risk of abnormal playing of the alarm, improving the stability of the system and enhancing the user experience.

### BRIEF DESCRIPTION OF DRAWINGS

In order to illustrate the technical solutions in the embodiments of the present disclosure or the prior art more clearly, the figures to be used in the description of the embodiments or the prior art will be introduced briefly. Obviously, the figures in the following description only show some embodiments of the present disclosure. Those skilled in the art can obtain figures of other embodiments based on these figures without any inventive efforts.
FIG. 1 is a flowchart illustrating a method for playing an alarm according to an embodiment;
FIG. 2 is a schematic diagram showing a structure of an apparatus for playing an alarm according to an embodiment;
FIG. 3 is a schematic diagram showing an internal structure of an electronic device according to an embodiment; and
FIG. 4 is a block diagram showing a part of a structure of an electronic device that is related to a computer device according to an embodiment of the present disclosure.

### DESCRIPTION OF EMBODIMENTS

In order to facilitate the understanding of the present disclosure, a more comprehensive description of the present disclosure will be given below with reference to the related figures. The preferred embodiments of the present disclosure are shown in the figures. However, the present disclosure can be implemented in many different forms and is not limited to the embodiments described herein. Rather, the purpose of providing these embodiments is to make the understanding of the present disclosure more thorough and comprehensive.

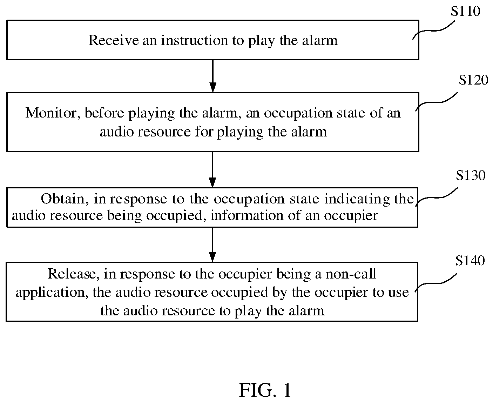

As shown in FIG. 1, an embodiment of the present disclosure provides a method for playing an alarm, including the following steps.

At S101, an instruction to play the alarm is received.

The instruction for the playing behavior of the alarm can be a ringtone resource identification, a music ringtone played for the alarm, a ringtone volume adjustment for the alarm, a music media format supported by the alarm, such as mp3 or mp4 format, or a display size of a prompt box for the alarm, such as 320*240 (according to capability information of a terminal, the prompt box for the alarm can be adapted to information such as a music media or picture corresponding to the alarm).

At S102, before playing of the alarm, an occupation state of an audio resource for playing the alarm is monitored.

An electronic device can monitor the occupation state information of the audio resource for use by an application to play the alarm using a built-in listening function (listen()). Taking an electronic device having an Android system as an example, a system level monitoring module can be created in a system framework layer (e.g., native/framework layer) for monitoring an audio mode of the application. Alternatively, a monitoring process can be created independently to monitor the audio mode of the application using a message transmission mechanism. For example, the monitoring module can be created at the framework layer and run in a system service program (system_server). Since the monitoring module is created in the system-level service framework layer, it can easily interact with other system services without any issue of permissions for system calls. Alternatively, the independent monitoring process can be created, with a separate listening function created and called in the process. The monitoring process can be set to start automatically at system startup, and can monitor audio call behaviors and audio mode adjustment behaviors of any other applications in real time. In particular, the monitoring process can capture ID information and an adjustment amount of the currently called audio mode in real time to determine the audio mode and the specific adjustment amount corresponding to the current adjustment behavior. The monitoring process can be developed independently and may not be coupled with the system to facilitate subsequent development and upgrades.

The audio resource for playing the alarm refers to a function resource of the terminal for audio playback. For example, it can be a setmode interface provided by an Audio Flinger service. In the current Android framework, the audio behavior can be played by calling the setmode function, e.g., setmode(0) defined as a media audio mode, setmode(1) defined as an alarm ringtone mode, and setmode(2) defined as a voice call mode, etc. In the step S102, it is detected whether the setmode(1) function interface is occupied, that is, the occupation state information of the audio resource for playing the alarm can be checked by monitoring an occupation state identifier of the setmode(1) function interface.

At S103, in response to the occupation state indicating that the audio resource is occupied, information of an occupier is obtained.

The audio resource for playing the alarm can be one of function interfaces of the terminal for audio playback. For example, the setmode(1) function interface can be an audio resource for setting the alarm playing behavior. If the setmode(1) function interface is occupied, the corresponding audio resource state identifier for playing the alarm will indicate the current state of the audio resource for playing the alarm as occupied.

The electronic device can obtain information of the occupier of one or more applications in real time. Here, the information of the occupier may include audio playback information, auto recording information and/or audio mode information. In particular, the audio playback information, audio recording information, and audio mode information may each include: a name of the occupier program, an audio behavior, a time length of occupation, information on whether the occupier is a malicious occupier, and a corresponding research and development company of the occupier program, etc. That is, if the occupation behavior of the occupier does not match the occupied audio resource for playing the alarm, the information of the occupier needs to be recorded for subsequent correction processing. For example, an audio stream of the occupier may be a media stream, but may occupy the setmode(1) audio function interface, whereas the audio interface corresponding to the media stream is the setmode(0) audio function interface. Since setmode(1) is for an alarm ringtone mode, such occupation with mismatch between such audio stream and the setmode(1) audio function interface will result in abnormal or even failed playing of the alarm ringtone.

It is to be noted that whether the occupier's use of the audio resource for playing the alarm is a malicious occupation can be determined by a relationship between an occupation frequency of occupation behaviors in a log that do not match the audio resource for playing the alarm and a predetermined frequency. When the occupation frequency of the occupation behaviors that do not match the audio resource for playing the alarm is higher than the predetermined frequency, it can be identified as a malicious occupation. When the occupation frequency of the occupation behaviors that do not match the audio resource for playing the alarm is lower than the predetermined frequency, it can be identified as an erroneous occupation. The predetermined frequency can be set depending on actual conditions, and this embodiment is not limited to any specific frequency. Alternatively, a malicious occupation can be identified by detecting that the occupier does not implement any audio behavior but occupies the audio resource that does not match its audio stream. A blacklist of occupier applications performing malicious occupations can be provided, and their audio behaviors will be monitored more intensively. Prompt information can even be provided when a user installs an application in the blacklist in an application store, indicating that the application has a malicious occupation behavior. For the occupiers performing erroneous occupations, the resources they occupy in use can be adjusted timely.

The occupation information of the occupier can be obtained using internal listening function (listen()) within the system. When necessary, an application will invoke the corresponding audio resource, and the listening function will record the audio resource invoked by the application at this time and the information of the occupier of the audio resource. The obtaining of the information of the occupier may include obtaining a name of the occupier program, an audio behavior, a time length of occupation, information on whether the occupier is a malicious occupier, and a corresponding research and development company of the occupier program, etc., so as to perform log management. More intensive monitoring can even be applied when the occupier program performs an audio behavior, to prevent the occupier from occupying an audio resource in a mismatching manner, which would otherwise result in abnormal playing of the audio stream that matches the audio resource.

At S 104, in response to the occupier being a non-call application, the audio resource occupied by the occupier is released to use the audio resource to play the alarm.

The occupation information of the occupier can be obtained using an internal listening function (listen()) within the system, and it can be determined from the obtained information of the occupier that the occupier is a non-call application. When there is a conflict in the audio resource occupation, if the occupier is an instant communication type of application and the occupier occupies the audio resource for playing the alarm, uses the audio resource once and then stops playing, in this case it is required to determine whether the time at which the playing using the audio resource once stops reaches the time at which the alarm is to be played. If the time at which the playing using the audio resource once stops and the time at which the playing of the alarm is to be started conflict, the audio resource will be released directly, and the use of the audio resource by the alarm will be resumed in time such that the alarm can be played normally. If the time at which the playing using the audio resource once stops and the time at which the playing of the alarm is to be started do not conflict, that is, if the time at which the playing using the audio resource once stops does not reach the time at which the playing of the alarm is to be started, the alarm will occupy the audio resource after the playing using the audio resource once stops, such that the alarm can be played normally. When the occupier is a non-instant communication application and the occupier occupies the audio resource exclusively to continuously play of a number of audio files, and the audio resource is not released until the non-instant communication application is deactivated, in this case the audio resource can be released directly, and the use of the audio resource by the alarm can be resumed. The abnormal playing of the alarm due to undesired use of the audio resource by the occupier can be corrected, which improves the audio experience of the user.

The method according to the embodiment of the present disclosure can further include: monitoring, in response to the occupier being a call application, a call state of the call application; and releasing, in response to the call state being a stopped state, the audio resource occupied by the occupier to use the audio resource to play the alarm.

It can be determined whether the call application is in an active or stopped state by detecting in real time whether there is a voice signal currently transmitted in an audio channel of the electronic device. Here, the voice signal may include a voice signal currently inputted from a microphone of the electronic device and a voice signal transmitted from the other party via the network. When it is detected in real time that there is no voice signal currently transmitted in the audio channel of the electronic device, i.e., when the call state is a stopped state, the audio resource occupied by the occupier can be released to play the alarm using the audio resource. That is, it can be determined that the occupier is a call application according to the information of the occupier, and then it can be detected whether the call is really in progress. There may be a situation where the call application occupies the audio resource while the call state is the stopped state.

During the process of the call, the electronic device can monitor the voice signal of the call in real time, and determine whether a call hang-up event is triggered according to the monitored voice signal. When the call hang-up event is triggered, it can be determined that the electronic device is in the hang-up state. In particular, during the process of the call, the electronic device can detect in real time whether a voice signal is currently transmitted in the audio channel of the electronic device. The voice signal may include a voice signal currently inputted from a microphone of the electronic device and a voice signal transmitted from the other party via the network. When at least one voice signal is monitored, it indicates that the call is still in progress.

The method according to the embodiment of the present disclosure can further include: monitoring, in response to the call state being an active state, whether the call state is switched from the active state to the stopped state within predetermined time; detecting, in response to monitoring within the predetermined time that the call state is switched from the active state to the stopped state, whether the call application continues to occupy the audio resource; releasing, in response to detecting that the call application continues to occupy the audio resource after switched to the stopped state, the audio resource occupied by the call application to use the audio resource to play the alarm; and playing the alarm in response to the call application releasing the audio resource after switched to the stopped state.

The process of detecting the call state may include: monitoring a voice signal of the call in real time; determining whether a call hang-up event is triggered according to the monitored voice signal; and in response to the call hang-up event being triggered, determining that the electronic device is in the hang-up state. In particular, during the process of the call, the electronic device can detect in real time whether a voice signal is currently transmitted in the audio channel of the electronic device. The voice signal may include a voice signal currently inputted from a microphone of the electronic device and a voice signal transmitted from the other party via the network. When at least one voice signal is monitored, it indicates that the call is still in progress.

The call state being detected as the active state means that the call application is performing a call behavior, and the call state being detected as the stopped state means that the call application has stopped the call behavior, i.e., the process of switching the call state from the active state to the stopped state is detected. Predetermined time can be set, e.g., to any value from 10min to 60min, such as 10min, 20min, 30min, 40min, 50min, 60min, or 3min, 5min, or the like. The predetermined time can be set according to user needs or preferences and the present disclosure is not limited to any specific value. Within the predetermined time, if it is monitored that the call state is switched from the active state to the stopped state, i.e., it is monitored that the call is stopped, it is checked whether the stopped call application still occupies the audio resource. If the call application still occupies the audio resource, the audio resource occupied by the call application can be released and the alarm can be played using the audio resource. If the call state is switched from the active state to the stopped state and the call application releases the audio resource, the audio resource can be used directly to play the alarm.

The method according to the embodiment of the present disclosure can further include: providing a backup audio resource, to which an audio behavior of the occupier is switched in response to the occupier releasing the audio resource, such that the audio behavior of the occupier is played normally. The backup audio resource may also be used to play the alarm if it is not monitored that the call state is switched from the active state to the stopped state within the predetermined time. The audio behavior of the occupier being switched to the backup audio resource may include: the occupier invoking the backup audio resource according to a priority of the audio behavior. The backup audio resource provides the occupier with a permission to modify the priority.

A backup audio resource can be provided in the electronic device, and the audio mode is converted with the backup audio resource. In the step S104, after the occupier releases the audio resource for playing the alarm, the alarm occupies the audio resource, and the alarm can be played normally. The backup audio resource is provided such that the occupier releasing the audio resource for playing the alarm can be switched to the backup audio resource and the audio resource of the occupier can still be played normally. That is, if the occupier is a non-call application, it has a lower priority than the alarm, and the occupier as the non-call application can release the audio resource and can be switched to the backup audio resource, such that the audio resource can be used to play the alarm. If the occupier is a call application and it is not monitored that the call state of the call application is switched from the active state to the stopped state within the predetermined time, it indicates that the call duration exceeds the predetermined time. In order to prevent the user from missing alerts for major events, the backup audio resource can be used to play the alarm. The predetermined time can be set, e.g., to any value from 10min to 60min, such as 10min, 20min, 30min, 40min, 50min, 60min, or 3min, 5min, or the like. The predetermined time can be set according to user needs or preferences and the present disclosure is not limited to any specific value. Within the predetermined time, if it is monitored that the call state is switched from the active state to the stopped state, that is, it is monitored that the call is stopped, it is checked whether the stopped call application still occupies the audio resource. If the call application still occupies the audio resource, the audio resource occupied by the call application can be released and the alarm can be played using the audio resource. If the call state is switched from the active state to the stopped state and the call application releases the audio resource, the audio resource can be used directly to play the alarm.

In the Android system, according to the current google SDK development kit agreement, there is a setmode function that can be used as the backup audio resource. In the current Android framework, the audio resource switching can be achieved by calling the setmode function. For example, setmode(0) can be defined as a media audio mode, setmode(1) can be defined as a ringtone mode, setmode(2) can be defined as a call mode, etc. In particular, the backup audio resource is provided for switching of the audio resource of the occupier. The audio modes and a mapping table for the audio modes can be provided. According to the mapping table, with the backup audio resource, the audio mode of the application can be switched to the audio resource matching scenario information. As in the above example, specifically, in the mapping table, the audio resources match the audio modes, e.g., setmode(0) matches the media audio mode, setmode(1) matches the ringtone mode, setmode(2) matches the call mode, etc. Here, the call mode can be subdivided into a handset mode and a hands-free mode. The mapping table can be stored in a memory of the electronic device in a form of database, and the mapping table can be accessed using internal instructions when it needs to be invoked to determine the audio resource corresponding to the audio mode.

It is to be noted that different audio types have different default priorities. For example, the priories of calls, audio recordings, music, videos, and games go from high to low. High-priority audio can be prioritized to be played over low-priority audio. When an audio group transmitting a voice message creates an audio capturing object QAudioRecorder, the backup audio resource provides the occupier with the permission to modify the priority. For example, the priority of "games" can be modified to be higher than the priority of "music", the priority of "games" can be modified to be higher than the priority of "audio recordings", or the priority of "music" can be modified to be higher than the priority of "calls". The priorities of any of the above audio behaviors can be adjusted to be higher or lower according to user preferences and needs, and details thereof will be omitted here.

The method according to the embodiment of the present disclosure can further include: playing the alarm by using the audio resource for playing the alarm in response to the occupation state of the audio resource being idle.

The electronic device can monitor the occupation state information of the audio resource for an application using a built-in monitoring function. Taking an electronic device having an Android system as an example, a system level monitoring module can be created in a system framework layer (e.g., native/framework layer) for monitoring an audio mode of the application. Alternatively, a monitoring process can be created independently to monitor the audio mode of the application using a message transmission mechanism. For example, the monitoring module can be created at the framework layer and run in a system service program (system_server). Since the monitoring module is created in the system-level service framework layer, it can easily interact with other system services without any issue of permissions for system calls. If the audio resource for playing the alarm is not occupied, i.e., when the playing state of the alarm is normal, the alarm can be played directly, and the playing of the alarm is normal.

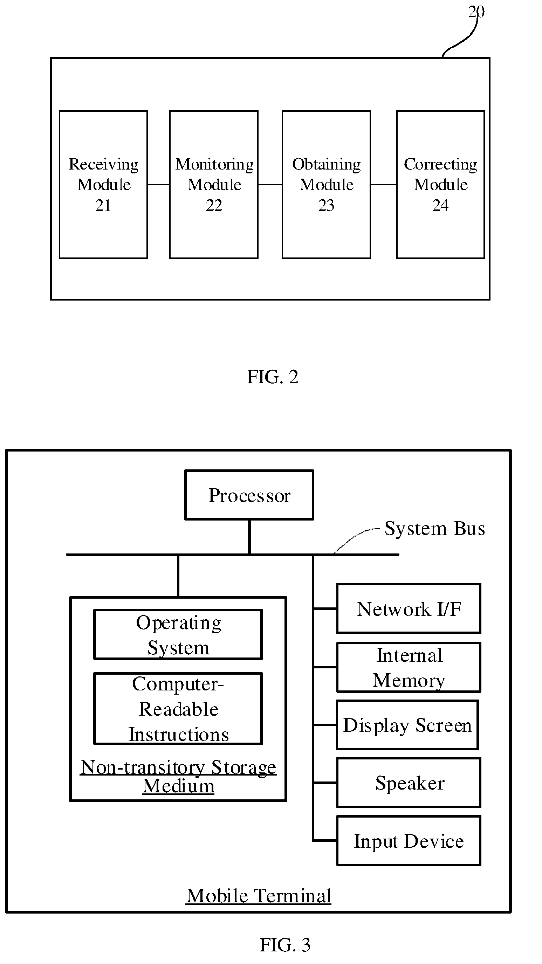

As shown in FIG 2, an embodiment of the present disclosure provides an apparatus for playing an alarm, including the following modules.

A receiving module 21 is configured to receive an instruction to play the alarm.

The instruction for the playing behavior of the alarm as received by the receiving module 21 can be a ringtone resource identification, a music ringtone played for the alarm, a ringtone volume adjustment for the alarm, a music media format supported by the alarm, such as mp3 or mp4 format, or a display size of a prompt box for the alarm, such as 320*240 or the like (according to capability information of the terminal, the prompt box for the alarm can be adapted to the music media or picture corresponding to the alarm).

A monitoring module 22 is configured to monitor, before playing the alarm, an occupation state of an audio resource 221 (not shown) for playing the alarm.

The monitoring module 22 can be a built-in monitoring function for monitoring the occupation state information of the audio resource 221 for use by an application to play the alarm. Taking an electronic device having an Android system as an example, a system-level monitoring module can be created in a system framework layer (e.g., native/framework layer) for monitoring an audio mode of the application. Alternatively, a monitoring process can be created independently to monitor the audio mode of the application using a message transmission mechanism. For example, the monitoring module can be created at the framework layer and run in a system service program (system_server). Since the monitoring module 22 is created in the system-level service framework layer, it can easily interact with other system services without any issue of permissions for system calls. Alternatively, the independent monitoring process can be created, with a separate monitoring function created and called in the process. The monitoring process can be set to start automatically at system startup, and can monitor audio call behaviors and audio mode adjustment behaviors of any other applications in real time. In particular, it can capture ID information and an adjustment amount of the currently called audio mode in real time to determine the audio mode and the specific adjustment amount corresponding to the current adjustment behavior. It can be developed independently and may not be coupled with the system to facilitate subsequent development and upgrades.

The audio resource 221 for playing the alarm refers to a function resource of the terminal for audio playback. For example, it can be a setmode resource provided by an Audio Flinger service. In the current Android framework, the audio behavior can be played by calling the setmode function, e.g., setmode(0) defined as a media audio mode, setmode(1) defined as an alarm ringtone mode, and setmode(2) defined as a voice call mode, etc. In the step S102, it is detected whether the setmode(1) function resource is occupied, that is, the occupation state information of the audio resource 221 for playing the alarm can be checked by monitoring an occupation state identifier of the setmode(1) function resource.

An obtaining module 23 is configured to obtain, in response to the occupation state of the audio resource indicating that the audio resource 221 is occupied, information of an occupier. The audio resource 221 for playing the alarm can be one of function resources of the terminal for audio playback. For example, the setmode(1) function resource can be an audio resource for setting the alarm playing behavior. If the setmode(1) function resource is occupied, the corresponding audio resource state identifier for playing the alarm will indicate the current state as occupied. The state information of the audio resource 221 for playing the alarm can be obtained by a detecting module.

The obtaining module 23 can obtain information of an occupier of one or more applications in real time. Here, the information of the occupier obtained by the obtaining module 23 may include audio playback information, auto recording information and/or audio mode information. In particular, each of the audio playback information, audio recording information, and audio mode information may include: a name of the occupier program, an audio behavior, a time length of occupation, information on whether the occupier is a malicious occupier, and a corresponding research and development company of the occupier program, etc. That is, if the occupation behavior of the occupier does not match the occupied audio resource 221 for playing the alarm, the information of the occupier needs to be recorded for subsequent correction processing. For example, an audio stream of the occupier may be a media stream, but may occupy the setmode(1) audio function resource, whereas the audio resource corresponding to the media stream is the setmode(0) audio function resource. Since setmode(1) is for an alarm ringtone mode, such occupation with mismatch between the audio stream and the setmode(1) audio function resource will result in abnormal or even failed playing of the alarm ringtone.

It is to be noted that whether the occupier's use of the audio resource 221 for playing the alarm is a malicious occupation can be determined by a relationship between an occupation frequency of occupation behaviors in a log that do not match the audio resource 221 for playing the alarm and a predetermined frequency. When the occupation frequency of the occupation behaviors that do not match the audio resource for playing the alarm is higher than the predetermined frequency, it can be identified as a malicious occupation. When the occupation frequency of the occupation behaviors that do not match the audio resource for playing the alarm is lower than the predetermined frequency, it can be identified as an erroneous occupation. Alternatively, a malicious occupation can be identified by detecting that the occupier does not implement any audio behavior but occupies the audio resource that do not match its audio stream. A blacklist of occupier applications performing malicious occupations can be provided, and their audio behaviors will be monitored more intensively. Prompt information can even be provided when an application store user installs an application in the blacklist, indicating that the application has a malicious occupation behavior. For the occupiers performing erroneous occupations, the resources they occupy in use can be adjusted timely.

The occupation information of the occupier can be obtained using internal listening function (listen()) within the system. When necessary, an application will invoke the corresponding audio resource, and the listening function will record the audio resource invoked by the application at this time and the information of the occupier of the audio resource. The obtaining of the information of the occupier may include obtaining a name of the occupier program, an audio behavior, a time length of occupation, information on whether the occupier is a malicious occupier, and a corresponding research and development company of the occupier program, etc., so as to perform log management. More intensive monitoring can even be applied when the occupier program performs an audio behavior, to prevent the occupier from occupying an audio resource in a mismatching manner, which would otherwise result in abnormal playing of the audio stream that matches the audio resource.

A correcting module 24 is configured to release, in response to the occupier being a non-call application, the audio resource occupied by the occupier to use the audio resource to play the alarm.

The occupation information of the occupier can be obtained using an internal listening function (listen()) within the system, and it can be determined from the obtained information of the occupier that the occupier is a non-call application. When there is a conflict in the audio resource occupation, if the occupier is an instant communication type of application and the occupier occupies the audio resource for playing the alarm, uses the audio resource once and then stops playing, in this case it is required to determine whether the time at which the playing using the audio resource once stops reaches the time at which the alarm is to be played. If the time at which the playing using the audio resource once stops and the time at which the playing of the alarm is to be started conflict, the audio resource will be released directly, and the use of the audio resource by the alarm will be resumed in time such that the alarm can be played normally. If the time at which the playing using the audio resource once stops and the time at which the playing of the alarm is to be started do not conflict, that is, if the time at which the playing using the audio resource once stops does not reach the time at which the playing of the alarm is to be started, the alarm will occupy the audio resource after the playing using the audio resource once stops, such that the alarm can be played normally. When the occupier is a non-instant communication application and the occupier occupies the audio resource exclusively to continuously play of a number of audio files, and the audio resource is not released until the non-instant communication application is deactivated, in this case the audio resource can be released directly, and the use of the audio resource by the alarm can be resumed. The abnormal playing of the alarm due to undesired use of the audio resource by the occupier can be corrected, which improves the audio user experience.

The apparatus according to the embodiment of the present disclosure can further include a call detecting module 25 (not shown) configured to monitor, in response to the occupier being a call application, a call state of the call application; and release, in response to the call state being a stopped state, the audio resource occupied by the occupier to use the audio resource to play the alarm.

It can be determined whether the call application is in an active or stopped state by detecting in real time whether there is a voice signal currently transmitted in an audio channel of the electronic device. Here, the voice signal may include a voice signal currently inputted from a microphone of the electronic device and a voice signal transmitted from the other party via the network. When it is detected in real time that there is no voice signal currently transmitted in the audio channel of the electronic device, i.e., when the call state is a stopped state, the audio resource occupied by the occupier can be released to play the alarm using the audio resource. That is, it can be determined that the occupier is a call application according to the information of the occupier, and then it can be detected whether the call is really in progress. There may be a situation where the call application occupies the audio resource while the call state is the stopped state.

During the process of the call, the electronic device can monitor the voice signal of the call in real time by using the call detecting module 25, and determine whether a call hang-up event is triggered according to the monitored voice signal. When the call hang-up event is triggered, it can be determined that the electronic device is in the hang-up state. In particular, during the process of the call, the electronic device can detect in real time whether a voice signal is currently transmitted in the audio channel of the electronic device. The voice signal may include a voice signal currently inputted from a microphone of the electronic device and a voice signal transmitted from the other party via the network. When at least one voice signal is monitored, it indicates that the call is still in progress.

The apparatus according to the embodiment of the present disclosure can further include a call processing module 26 (not shown) configured to monitor, in response to the call state being an active state, whether the call state is switched from the active state to the stopped state within predetermined time; detect, in response to monitoring within the predetermined time that the call state is switched from the active state to the stopped state, whether the call application continues to occupy the audio resource; release, in response to detecting that the call application continues to occupy the audio resource after switched to the stopped state, the audio resource occupied by the call application to use the audio resource to play the alarm; and play the alarm in response to the call application releasing the audio resource after switched to the stopped state.

The process of detecting the call state may include: monitoring a voice signal of the call in real time; determining whether a call hang-up event is triggered according to the monitored voice signal; and when the call hang-up event is triggered, determining that the electronic device is in the hang-up state. In particular, during the process of the call, the electronic device can detect in real time whether a voice signal is currently transmitted in the audio channel of the electronic device. The voice signal may include a voice signal currently inputted from a microphone of the electronic device and a voice signal transmitted from the other party via the network. When at least one voice signal is monitored, it indicates that the call is still in progress.

The call state being detected as the active state means that the call application is performing a call behavior, and the call state being the stopped state means that the call application stops the call behavior, i.e., the process of switching the call state from the active state to the stopped state is detected. Predetermined time can be set, e.g., to any value from 10min to 60min, such as 10min, 20min, 30min, 40min, 50min, 60min, or 3min, 5min, or the like. The predetermined time can be set according to user needs or preferences and the present disclosure is not limited to any specific value. Within the predetermined time, if it is monitored that the call state is switched from the active state to the stopped state, that is, it is monitored that the call is stopped, it is checked whether the stopped call application still occupies the audio resource. If the call application still occupies the audio resource, the audio resource occupied by the call application can be released and the alarm can be played using the audio resource. If the call state is switched from the active state to the stopped state and the call application releases the audio resource, the audio resource can be used directly to play the alarm.

The apparatus according to the embodiment of the present disclosure can further include a backup audio resource module 27 (not shown) configured to switch an audio behavior of the occupier to a backup audio resource in response to the occupier releasing the audio resource, such that the audio behavior of the occupier is played normally. The backup audio resource module 27 is also configured to play the alarm using the backup audio resource if the occupier is a call application, and it is not monitored that the call state of the call application is switched from the active state to the stopped state within the predetermined time. The occupier can invoke the backup audio resource module 27 according to a priority of the audio behavior, and the backup audio resource module 27 provides a third-party application with a permission to modify the priority.

The backup audio resource module 27 can perform a mode switching of the audio modes. In the step S104, after the occupier releases the audio resource for playing the alarm, the alarm occupies the audio resource, and the alarm can be played normally. The backup audio resource module 27 is provided such that the occupier releasing the audio resource for playing the alarm can be switched to the backup audio resource module 27 and the audio resource of the occupier can still be played normally. That is, if the occupier is a non-call application, it has a lower priority than the alarm, and the occupier as the non-call application can release the audio resource and can be switched to the backup audio resource, such that the audio resource can be used to play the alarm. If the occupier is a call application and it is not monitored that the call state of the call application is switched from the active state to the stopped state within the predetermined time, it indicates that the call duration exceeds the predetermined time. In order to prevent the user from missing alerts for major events, the backup audio resource can be used to play the alarm. When using the backup audio resource to play the alarm, a time length for playing the alarm can be calculated at the same time. When the time length for playing the alarm exceeds a predetermined playing time length, it indicates that the user may not hear the playing of the alarm via a speaker during the call. Accordingly, the output of the alarm audio stream can be adjusted from the speaker to an earphone, so as to allow the user to directly hear the sound of the alarm playing. In this way, it is possible to effectively remind the user that the alarm time arrives, thereby avoiding missing of alerts for important events or loss of notes on the user's daily life due to a low volume of the alarm playing in the call state, which would otherwise result in a degraded user experience. The above predetermined playing time length can be set to e.g., 1min, 2min, 3min, 5min, or the like. The predetermined playing time length can be set according to user needs or preferences and the present disclosure is not limited to any specific value. The predetermined time can be set, e.g., to any value from 10min to 60min, such as 10min, 20min, 30min, 40min, 50min, 60min, or 3min, 5min, or the like. The predetermined time can be set according to user needs or preferences and the present disclosure is not limited to any specific value. Within the predetermined time, if it is monitored that the call state is switched from the active state to the stopped state, that is, it is monitored that the call is stopped, it is checked whether the stopped call application still occupies the audio resource. If the call application still occupies the audio resource, the audio resource occupied by the call application can be released and the alarm can be played using the audio resource. If the call state is switched from the active state to the stopped state and the call application releases the audio resource, the audio resource can be used directly to play the alarm.

In the Android system, according to the current google SDK development kit agreement, there is a setmode function that can be used as the backup audio resource block 27. In the current Android framework, the audio resource switching can be achieved by calling the setmode function. For example, setmode(0) can be defined as a media audio mode, setmode(1) can be defined as a ringtone mode, setmode(2) can be defined as a call mode, etc. In particular, the backup audio resource module 27 is provided for switching of the audio resource of the occupier. The audio modes and a mapping table for the audio modes can be provided. According to the mapping table, with the backup audio resource module 27, the audio mode of the application can be switched to the audio resource matching scenario information. As in the above example, specifically, in the mapping table, the audio resources match the audio modes, e.g., setmode(0) matches the media audio mode, setmode(1) matches the ringtone mode, setmode(2) matches the call mode, etc. Here, the call mode can be subdivided into a handset mode and a hands-free mode. The mapping table can be stored in a memory of the electronic device in a form of database, and the mapping table can be accessed using internal instructions when it needs to be called to determine the audio resource corresponding to the audio mode.

It is to be noted that different audio types have different default priorities. For example, the priories of calls, audio recordings, music, videos, and games go from high to low. High-priority audio can be prioritized to be played over low-priority audio. When an audio group transmitting a voice message creates an audio capturing object QAudioRecorder, the backup audio resource module 27 provides the occupier with the permission to modify the priority. For example, the priority of "games" can be modified to be higher than the priority of "music", the priority of "games" can be modified to be higher than the priority of "audio recordings", or the priority of "music" can be modified to be higher than the priority of "calls". The priorities of any of the above audio behaviors can be adjusted to be higher or lower according to user preferences and needs, and details thereof will be omitted here.

The apparatus according to the embodiment of the present disclosure may further include a direct playing module 27 (not shown) configured to play the alarm directly using the audio resource 221 for playing the alarm in response to the occupation state of the audio resource 221 for playing the alarm being idle.

The electronic device can monitor the occupation state information of the audio resource 221 for use by an application for playing the alarm using a built-in monitoring function. Taking an electronic device having an Android system as an example, a system-level monitoring module can be created in a system framework layer (e.g., native/framework layer) for monitoring an audio mode of the application. Alternatively, a monitoring process can be created independently to monitor the audio mode of the application using a message transmission mechanism. For example, the monitoring module can be created at the framework layer and run in a system service program (system_server). Since the monitoring module is created in the system-level service framework layer, it can easily interact with other system services without any issue of permissions for system calls. If the audio resource for playing the alarm is not occupied, i.e., when the playing state of the alarm is normal, the alarm can be played directly using the direct playing module 27, and the playing of the alarm is normal.

FIG. 3 is a schematic diagram showing an internal structure of an electronic device in an embodiment. As shown in FIG. 3, the electronic device includes a processor, a non-transitory storage medium, an internal memory, a network interface, a sound collection device, a speaker, a display screen, and an input device that are connected via a system bus. Here, the non-transitory storage medium of the terminal stores an operating system and computer-readable instructions. The computer-readable instructions, when executed by the processor, cause the electronic device to perform the method for processing an application. The processor is configured to provide computing and control capabilities to support the operation of the entire electronic device. The internal memory in the electronic device provides an environment in which the computer-readable instructions in the non-transitory storage medium can be executed. The display screen of the electronic device can be a liquid crystal display screen or an electronic ink display screen, etc. The input device can be a touch sensitive layer covered on the display screen, or a button, a trackball, or touchpad provided on a casing of the electronic device, or an external keyboard, touchpad, or mouse, etc. The electronic device can be a mobile phone, a tablet computer, a personal digital assistant, or a wearable device, etc. It can be appreciated by those skilled in the art that the structure shown in FIG. 3 is only a block diagram of a part of the structure that is related to the solutions of the present disclosure, and does not constitute a limitation on the electronic device to which the solutions of the present disclosure can be applied. The electronic device may include more or less components than those shown in the figure, or some components can be combined, or a different arrangement of the components can be provided.

Here, the above method of processing the application may include: receiving an instruction to play the alarm; monitoring, before playing the alarm, an occupation state of an audio resource for playing the alarm; obtaining, in response to the occupation state indicating that the audio resource is occupied, information of an occupier; and releasing, in response to the occupier being a non-call application, the audio resource occupied by the occupier to use the audio resource to play the alarm.

In addition, an embodiment of the present disclosure also provides a non-transitory computer-readable storage medium, having a computer program stored thereon. The computer program, when executed by a processor, implements the steps in the above method for processing the application.

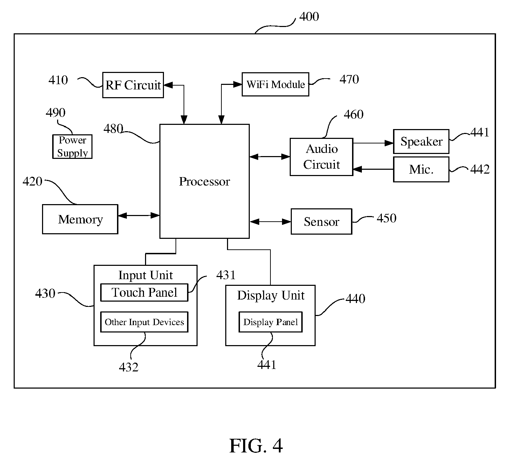

An embodiment of the present disclosure also provides a computer device, as shown in FIG. 4. For the purpose of illustration, only those parts related to the embodiments of the present disclosure are shown. For specific technical details that are not disclosed, reference can be made to the method embodiments of the present disclosure. The computer device can be any terminal device, including an electronic device, a tablet computer, a Personal Digital Assistant (PDA), a Point of Sales (POS) terminal, a vehicle-mounted computer, a wearable device, etc. In particular, the computer device can be e.g., an electronic device.

In addition, an embodiment of the present disclosure also provides a non-transitory computer-readable storage medium, having a computer program stored thereon. The computer program, when executed by a processor, implements the steps in the above method for playing an alarm.

An embodiment of the present disclosure also provides a computer device, as shown in FIG. 4. For the purpose of illustration, only those parts related to the embodiments of the present disclosure are shown. For specific technical details that are not disclosed, reference can be made to the method embodiments of the present disclosure. The computer device can be any terminal device, including an electronic device, a tablet computer, a Personal Digital Assistant (PDA), a Point of Sales (POS) terminal, a vehicle-mounted computer, a wearable device, etc. In particular, the computer device can be e.g., an electronic device.

FIG. 4 is a block diagram showing a part of a structure of an electronic device that is related to a computer device according to an embodiment of the present disclosure. Referring to FIG. 4, the electronic device includes: a Radio Frequency (RF) circuit 410, a memory 420, an input unit 430, a display unit 440, a sensor 450, an audio circuit 460, a wireless fidelity (WiFi) module 470, a processor 480, and a power supply 490, etc. It can be appreciated by those skilled in the art that the structure of the electronic device shown in FIG. 4 does not constitute a limitation on the electronic device. The electronic device may include more or less components than those shown in the figure, or some components can be combined, or a different arrangement of the components can be provided.

Here, the RF circuit 410 can be configured to receive and transmit signals during information transmission or call. It can receive downlink information from a base station and provide it to the processor 480 for processing, or transmit uplink data to the base station. Generally, the RF circuit includes, but is not limited to, an antenna, at least one amplifier, a transceiver, a coupler, a Low Noise Amplifier (LNA), a duplexer, and the like. In addition, the RF circuit 410 can also communicate with the network and other devices by means of wireless communication. The above wireless communication can use any communication standard or protocol, including but not limited to Global System of Mobile communication (GSM), General Packet Radio Service (GPRS), Code Division Multiple Access (CDMA), Wideband Code Division Multiple Access (WCDMA), Long Term Evolution (LTE), e-mail, Short Messaging Service (SMS), etc.

The memory 420 may be configured to store software programs and modules. The processor 480 performs various functional applications and data processing of the electronic device by executing the software programs and modules stored in the memory 420. The memory 420 may mainly include a program storage area and a data storage area. The program storage area is used to store an operating system, an application program required by at least one function (such as an application program for a sound playback function, an application program for an image playback function, or the like), etc. The data storage area can store data (such as audio data, address book, etc.) created according to the use of the electronic device. In addition, the memory 420 may include a high-speed random access memory, and may also include a non-transitory memory, such as at least one magnetic disk storage device, a flash memory device, or any other transitory solid-state storage device.

The input unit 430 may be configured to receive entered number or character information, and generate key signal input related to user settings and function control of the electronic device 400. In particular, the input unit 430 may include a touch panel 431 and other input devices 432. The touch panel 431, also referred to as a touch screen, can collect user touch operations on or near it (e.g., operations by the user on or near the touch panel 431 using any suitable object or accessory such as finger, stylus, etc.), and drive a corresponding connected device according to a predetermined program. In one embodiment, the touch panel 431 may include two parts: a touch detection device and a touch controller. Here, the touch detection device detects a position of the user's touch, detects a signal in response to the touch operation, and transmits the signal to the touch controller. The touch controller receives the touch information from the touch detection device, converts it into touch point coordinates, and then transmits them to the processor 480. The touch controller can also receive and execute commands transmitted by the processor 480. In addition, the touch panel 431 can be implemented in any of various types such as resistive, capacitive, infrared, and surface acoustic wave touch panels. In addition to the touch panel 431, the input unit 430 may also include other input devices 432. In particular, the other input devices 432 may include, but not limited to, one or more of a physical keyboard, a function key (such as volume control key, on/off keys, etc.), or the like.

The display unit 440 may be configured to display information inputted by the user or information provided to the user and various menus of the electronic device. The display unit 440 may include a display panel 441. In one embodiment, the display panel 441 may be configured in any of various forms including Liquid Crystal Display (LCD), Organic Light-Emitting Diode (OLED), etc. In one embodiment, the touch panel 431 may cover the display panel 441. The touch panel 431, when detecting a touch operation on or near it, transmits it to the processor 480 to determine the type of the touch event. Then the processor 480 provides a corresponding visual output on the display panel 441 according to the type of the touch event. While in FIG. 4 the touch panel 431 and the display panel 441 are shown as two independent components to implement the input and input functions of the electronic device, in some embodiments the touch panel 431 and the display panel 441 can be integrated to implement the input and output functions of the electronic device.

The electronic device 400 may further include at least one type of sensor 450, such as a light sensor, a motion sensor, and other sensors. In particular, the light sensor may include an ambient light sensor and a proximity sensor. The ambient light sensor can adjust the brightness of the display panel 441 according to the brightness of the ambient light. The proximity sensor can turn off the display panel 441 and/or a backlight when the electronic device is moved to a proximity to the ear. The motion sensor can include an acceleration sensor, which can detect a magnitude of acceleration in any of various directions, and can detect a magnitude and a direction of gravity when it is stationary. The motion sensor can be used in an application for identifying a pose of the electronic device (such as switching between horizontal displaying and vertical displaying) or a vibration identification related function (such as pedometer or percussion), etc. In addition, the electronic device can also be equipped with other sensors such as a gyroscope, a barometer, a hygrometer, a thermometer, an infrared sensor, and the like.

The audio circuit 460, a speaker 461, and a microphone 462 may provide an audio interface between the user and the electronic device. The audio circuit 460 can transmit an electric signal obtained by converting received audio data to the speaker 461, and the speaker 461 can convert it into a sound signal for outputting. On the other hand, the microphone 462 can convert the collected sound signal into an electric signal, which is received and converted by the audio circuit 460 into audio data, outputted to the processor 480 for processing, and then transmitted to another electronic device via the RF circuit 410 or outputted to the memory 420 for subsequent processing.

WiFi is a short-range wireless transmission technology. The electronic device can help the user send and receive emails, browse web pages, and access streaming media through the WiFi module 470. It provides the user with wireless broadband Internet access. While the WiFi module 470 is shown in FIG. 4, it can be appreciated that it is not a necessary component of the electronic device 400 and can be omitted as appropriate.

The processor 480 is the control center of the electronic device. It uses various interfaces and lines to connect various parts of the entire electronic device, and performs various functions of the electronic device and processes data by performing or executing the software programs and/or modules stored in the memory 420 and invoking the data stored in the memory 420, so as to monitor the electronic device as a whole. In an embodiment, the processor 480 may include one or more processing units. In an embodiment, the processor 480 may integrate an application processor and a modem processor. Here, the application processor mainly processes an operating system, a user interface, an application program, etc. The modem processor mainly processes wireless communication. It can be appreciated that the above modem processor may not be integrated into the processor 480.

The electronic device 400 also includes a power source 490 (such as a battery) for supplying power to various components. Preferably, the power source can be logically connected to the processor 480 via a power management system, such that functions such as charging, discharging, and power consumption management can be managed by the power management system.

In an embodiment, the electronic device 400 may further include a camera, a Bluetooth module, and the like.

In an embodiment of the present disclosure, the processor 480 included in the computer device implements the method according to any of the above embodiments when the computer program stored in the memory is executed.

It can be appreciated by those skilled in the art that all or a part of the processes in the methods according to the above embodiments can be implemented by relevant hardware following instructions of a computer program. The program can be stored in a non-transitory computer-readable storage medium. Here, when the program is executed, it may include the processes of the above method embodiments. The storage medium may be a magnetic disk, an optical disc, a Read-Only Memory (ROM), etc. The embodiments of the present disclosure also provide a computer-readable storage medium having a computer program stored thereon. The program, when executed by a processor, implements the method according to any of the above embodiments.

The technical features of the above embodiments can be combined arbitrarily. For the purpose of conciseness, not all possible combinations of the various technical features in the above embodiments have been described. However, any combination of these technical features, provided that they do not conflict, are to be encompassed by the scope of the present disclosure.

The above embodiments only disclose some implementations of the present disclosure. While they are described with specifics and details, they should not be considered as limiting the scope of the present disclosure. It is to be noted that a number of modifications and improvements can be made by those skilled in the art without departing from the concept of the present disclosure, and these modifications and improvements all fall within the scope of the present disclosure. Therefore, the scope of the present disclosure are defined only by the claims as attached.

## Claims

1. A method for playing an alarm, comprising:
receiving an instruction to play the alarm;
monitoring, before playing the alarm, an occupation state of an audio resource for playing the alarm;
obtaining information of an occupier in response to the occupation state indicating that the audio resource is occupied; and
releasing the audio resource occupied by the occupier to use the audio resource to play the alarm, in response to the occupier being a non-call application.

2. The method according to claim 1, further comprising:
monitoring, in response to the occupier being a call application, a call state of the call application; and
releasing, in response to the call state being a stopped state, the audio resource occupied by the occupier to use the audio resource to play the alarm.

3. The method according to claim 2, wherein said monitoring the call state of the call application and releasing, in response to the call state being the stopped state, the audio resource occupied by the occupier to use the audio resource to play the alarm comprise:
monitoring, in response to the call state being an active state, whether the call state is switched from the active state to the stopped state within predetermined time;
detecting, in response to monitoring within the predetermined time that the call state is switched from the active state to the stopped state, whether the call application continues to occupy the audio resource;
releasing, in response to detecting that the call application continues to occupy the audio resource after switched to the stopped state, the audio resource occupied by the call application to use the audio resource to play the alarm; and
playing the alarm in response to the call application releasing the audio resource after switched to the stopped state.

4. The method according to any of claims 1-3, further comprising:
providing a backup audio resource, to which an audio behavior of the occupier is switched in response to the occupier releasing the audio resource, such that the audio behavior of the occupier is played normally.

5. The method according to claim 4, wherein the audio behavior of the occupier being switched to the backup audio resource comprises:
the occupier invoking the backup audio resource according to a priority of the audio behavior, the backup audio resource providing the occupier with a permission to modify the priority.

6. The method according to claim 1, wherein the information of the occupier comprises: audio playback information, audio recording information, and/or audio mode information.

7. The method according to claim 1, further comprising:
playing the alarm by using the audio resource in response to the occupation state of the audio resource being idle.

8. An apparatus for playing an alarm, comprising:
a receiving module configured to receive an instruction to play the alarm;
a monitoring module configured to monitor, before playing the alarm, an occupation state of an audio resource for playing the alarm;
an obtaining module configured to obtain, when the occupation state indicates that the audio resource is occupied, information of an occupier; and
a correcting module configured to release, when the occupier is a non-call application, the audio resource occupied by the occupier to use the audio resource to play the alarm.

9. An electronic device, comprising a memory and a processor, wherein the memory stores a computer program which, when executed by the processor, causes the processor to perform steps of the method for playing an alarm according to any of claims 1-7.

10. A non-transitory computer readable storage medium, having a computer program stored thereon, the computer program, when executed by a processor, implementing steps of the method for playing an alarm according to any of claims 1-7.
